# EUROPEAN PATENT SPECIFICATION

(11) **EP 2 366 473 B1**
(45) Date of publication and mention of the grant of the patent: **09.10.2013**
(21) Application number: 11158575.8
(22) Date of filing: 16.03.2011
(51) Int. Cl.: B21D 53/26, B21H 1/04, B21K 1/42

(54) **Method and device for producing a pulley for motor vehicle applications**
Verfahren und Vorrichtung zur Herstellung einer Riemenscheibe für Kraftfahrzeugsanwendungen
Procédé et dispositif de production d'une poulie pour applications de véhicule à moteur

(30) Priority: 16.03.2010 IT TO20100203
(43) Date of publication of application: 21.09.2011
(73) Proprietor: Agla Power Transmission S.p.a., Avigliana (IT)
(72) Inventor: Bonù, Oscar, 10051 Avigliana (IT)
(74) Representative: Bergadano, Mirko

(56) References cited:
- JP-A- 2008 264 821
- US-A- 5 941 113
- US-A1- 2007 125 147

## Description

The present invention relates to a method and a device for producing a pulley for motor vehicle applications according to the preambles of claims 1 and 7 respectively (see for example JP-A-2008 264 821), in particular a belt tightener for a belt drive unit of a motor vehicle.

The pulleys of the above-mentioned type are normally formed by two, substantially cylindrical annular walls, concentric to each another and maintained radially spaced by an intermediate annular connection portion substantially extending in direction orthogonal to the annular walls themselves. In practice, such pulleys have an H section and are currently obtained by means of chip forming processes, e.g. by turning, starting from a full, cylindrical element.

This type of machining has a number of drawbacks.

Firstly, because the shape of the final product is obtained practically by "digging" a full starting cylinder there is a considerable waste of material with consequent high costs. Furthermore, turning operations do not allow to obtain particularly thin thicknesses, or rather the thin thicknesses may only be obtained by accepting frequent tool breakages, with once again rather high related costs. Consequently, by analyzing the problem from a different point of view, the pulleys of the type of described above may be currently produced at reasonable costs only by settling for considerably thick annular walls and connection portion, with consequent rather heavy weight of the final product.

It is thus the object of the present invention to provide a method and a device which allow to produce a pulley of the type described above at lower costs and with a lighter overall weight than that of the pulleys obtained by means of the known manufacturing processes.

The aforesaid object is reached by the present invention in that it relates to a method and a device for producing a pulley for motor vehicle applications, as defined in claim 1 and in claim 7, respectively.

For a better understanding of the present invention, a preferred embodiment will now be described by way of non-limitative example only and with reference to the accompanying drawings, in which:
- figures 1 and 2 show a first mould of the device for making a pulley for motor vehicle applications in axial section and in two different operating conditions according to the present invention;
- figures 3 and 4 show a second mould of the device object of the present invention in axial section and two different operating conditions;
- figure 5 shows the original product used in the method and in the device according to the present invention in axial section;
- figure 6 shows an intermediate product which can be obtained by means of the mould in figures 1 and 2 during the method of this invention in axial section; and
- figure 7 shows the pulley obtained by means of the method and device according to the present invention in axial section.

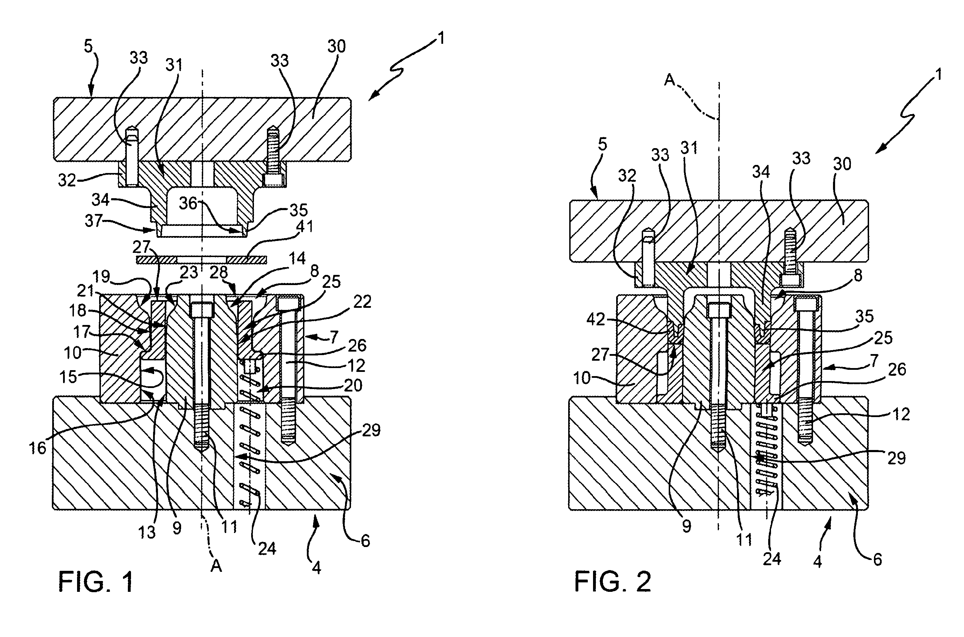

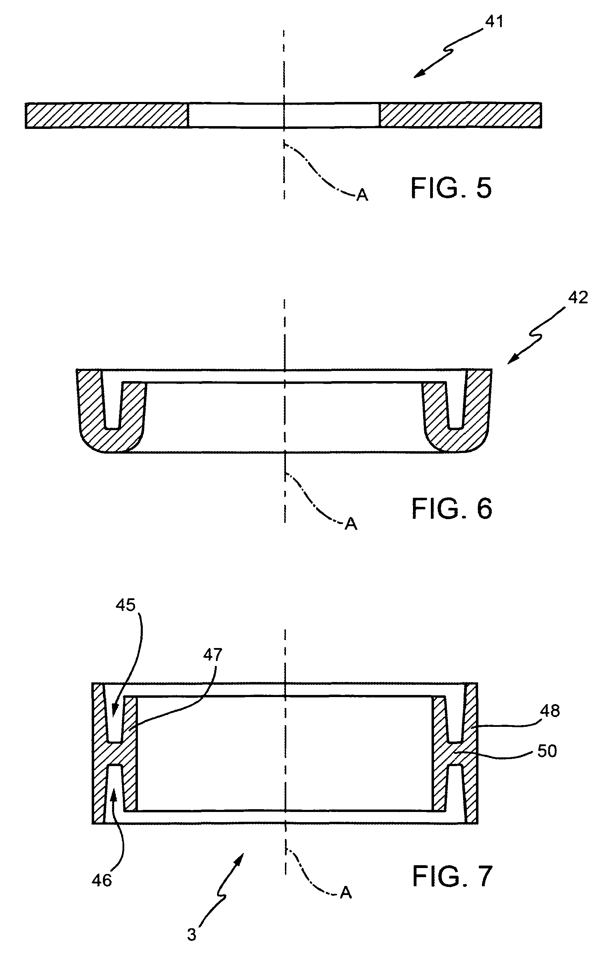

In figures 1, 2 and 3, 4 numerals 1 and 2 indicate respectively two different moulds of the device according to the present invention, which are used in sequence for producing a pulley 3 (figure 7) for motor vehicle applications, in the illustrated case in point a belt tightener for a belt drive of a motor vehicle.

In particular, the mould 1 is used first, and comprises a fixed half mould 4, a mobile half mould 5 facing the fixed half mould 4 and cooperating, in use, with the latter along an axis A, and an actuating assembly (not shown) of the mobile half mould 5 along axis A itself between an opening position (figure 1), in which the mobile half mould 5 is separated from the fixed half mould 4, and a closing position (figure 2), in which the mobile half mould 5 cooperates with the fixed half mould 4.

As seen in figures 1 and 2, the fixed half mould 4 is coaxial to axis A and essentially comprises a base 6 and a die 7, integrally and overhangingly carried by the base 6 and defining a through annular forming cavity 8 of axis A, open both towards the mobile half mould 5 and towards the base 6 itself.

In the illustrated case in point, die 7 is formed by a core 9 and by a tubular element 10, also with axis A, radially more external to core 9 and delimiting the forming cavity 8 therewith.

Both the core 9 and the tubular element 10 are overhangingly fixed to the base 6 by means of respective screws 11, 12.

Core 9 is externally delimitated by a substantially cylindrical surface 13 with axis A, and has an end portion 14 manifestly tapered towards the mobile half mould 5 and a concave curvilinear configuration towards the tubular element 10 or, more in general, outwards.

The tubular element 10 delimits the forming cavity 8 with a radially more internal surface 15 thereof, which has, in sequence starting from the base 6, a first cylindrical segment 16, an annular shoulder 17 facing the base 6 itself, a second substantially cylindrical segment 18 of diameter smaller than that of segment 16, and an end portion 19, facing the end portion 14 of core 9, having a gradually increasing diameter with respect to axis A and a concave curvilinear configuration towards the core 9 itself.

The core 9 and the tubular element 10 thus mutually define a forming cavity 8, which, in turn, has a first constant section cylindrical portion 20 between the base 6 and the shoulder 17, and a second increasing section portion 21 formed by a first part 22, in which a slight increase of section is found, and a second part 23 manifestly flared towards the mobile half mould 5, having, in section, a receptacle with curvilinear arch profile configuration; it is worth noting that the end portions 14, 19 of the surfaces 13, 15 have a different inclination with respect to axis A, and in particular the end portion 14 has a steeper gradient than the end portion 19.

In the illustrated case in point, both delimiting surfaces 13, 15 of the forming cavity 8 are smooth.

The fixed half mould 4 further carries a blank holder element 25 with annular configuration, fitted in axially mobile manner along axis A within the forming cavity 8.

The blank holder element 25 has a cylindrical tubular shape, is provided, at an end thereof arranged on the side of the base 6, with an annular protrusion 26 and ends on the opposite side of a flat head surface 27.

The blank holder element 25 is elastically loaded by a plurality of helical springs 24 in a first advanced operating position (figure 1), in which it engages an end opening 28 of the forming cavity 8 facing the mobile half mould 5 with the head surface 27 thereof, and may be moved against the bias of the springs 24 to a second retracted operating position (figure 2), in which the head surface 27 thereof is engaged in part 22 of the forming cavity 8 and thus moved away from the end opening 28.

In the first operating position, the protrusion 26 of the blank holder element 25 abuttingly cooperates with shoulder 17, while in the second operating position the aforesaid protrusion 26 is arranged in contact with base 6.

The springs 24 are accommodated in the respective seats 29 of the base 6 and have a first end cooperating with the bottom (not shown) of the seats 29 themselves and a second end cooperating with the end of the blank holder element 25 carrying the protrusion 26.

According to a possible alternative (not shown) the helical springs 24 may be replaced by gas springs.

The mobile half mould 5 essentially comprises a supporting wall 30 and a punch 31 with annular configuration, integrally and overhangingly carried by the supporting wall 30, extending coaxially to axis A towards the die 7 of the fixed half mould 4 and adapted to be inserted in the forming cavity 8 pushing the blank holder element 25 into the second operating position against the bias of the springs 24.

The punch 31 integrally comprises a base flange 32 fixed by means of screws 33 to the supporting wall 30 and a cylindrical tubular engaging body 34, adapted to be inserted in the forming cavity 8 during the approaching movement of the mobile half mould 5 to the fixed half mould 4 along axis A.

In particular, in the closing position of the mobile half mould 5 on the fixed half mould 4 (figure 2), the engaging body 34 of the punch 31 is accommodated in the portion 21 of the forming cavity 8 and cooperates with the product during the step of forming on the opposite part of the blank holder element 25.

As shown in figures 1 and 2, the engaging body 34 of the punch 31 ends axially towards the fixed half mould 4, with an annular head portion 35 having a reduced section with respect to the remaining part of the engaging body 34 itself and tapered towards the free end thereof.

As can be seen, the head portion 35 is internally and externally delimited by respective truncated-cone-shaped side surfaces 36, 37, mutually converging towards the free end.

In particular, the surfaces 36, 37 originate from different axial zones spaced between one another from the engaging body 34 and thus have different axial heights. More precisely, the origin zone of the internal side surface 36 is arranged farther away from flange 32 than the origin zone of the external side surface 37; in other words, the height of the internal side surface 36 is lower than the axial height of the external side surface 37.

The diameters side surfaces 36, 37 are increasing towards the free end of the head portion 35 and towards the flange 32, respectively.

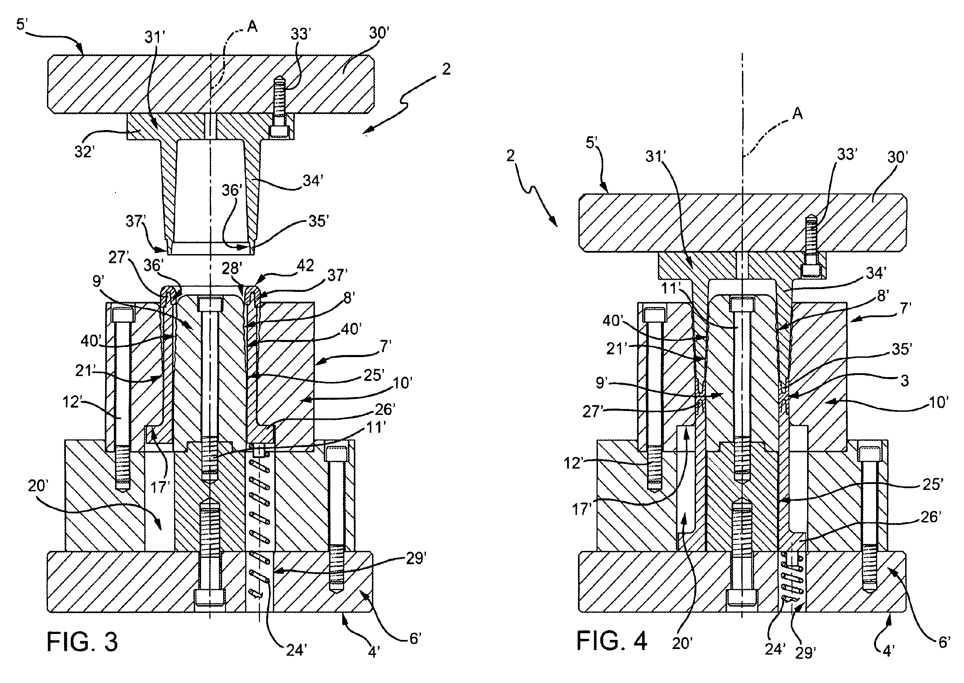

Figures 3 and 4 show mould 2, which has a structure similar to that of mould 1 and will thus be described hereinafter only by what differs from mould 1 itself, indicating equal or equivalent parts with the same reference numbers followed by prime "'".

In particular, the mould 2 comprises a fixed half mould 4', a mobile half mould 5' and a blank holder element 25' having configurations of entirely similar quality to that of the half moulds 4, 5 and of the blank holder element 25 (which therefore will not be described) but of different sizes.

More in detail, the axial size of the forming cavity 8', the blank holder element 25' and the engaging body 34' of the punch 31' of the mobile half mould 5' is larger than that of the corresponding elements of the mould 1.

The most significant differences concern:
- the blank holder element 25', which no longer ends with a flat head surface but has a head portion 27' identical to the head portion 35 of punch 31 of the mould 1 and to the head portion 35' of the punch 31'; and
- the forming cavity 8', which has, proceeding from the shoulder 17' towards the end of the bottom die 7' facing the mobile half mould 5', a portion 21' with a gradually increasing section delimited by opposite conical surfaces 40', provided with waves at least in the part closest to the aforesaid end.

In use, pulley 3 is produced by means of two subsequent forming operations carried out on the moulds 1 and 2, respectively.

The first forming operation is carried out on mould 1 starting from a flat, centrally perforated disc 41; in particular, disc 41 is positioned near the opening of the end 28 of the forming cavity 8, resting it on the flat head surface 27 of the blank holder element 25 maintained in the first operating position thereof by the springs 24.

At this point, the mobile mould 4 is operated making the punch 31 couple with the forming cavity 8. During this step, with the head portion 35 thereof the punch 31 presses disc 41 against the head surface 27 of the blank holder element 25 and against the flared end portions 14, 19 of the surfaces 13, 15, which facilitate the U-shaped bending; during the engagement movement thereof in the forming cavity 8, the punch 31 further determines the movement of the blank holder element 25 to the second operating position against the bias of springs 24.

An annular element 42, shown in detail in figure 6, having a U-shaped section complementary to the shape of the head portion 35 of the punch 31 is obtained at the end of this first forming operation.

At this point, the annular element 42 is extracted from the mould 1 and inserted in the mould 2. In particular, the annular element 42 is positioned near the opening of the end 28' of the forming cavity 8', resting it with the hollow part thereof engaging on the head portion 27' complementary to the blank holder element 25' maintained in the first operating position by the springs 24'.

At this point, the mobile half mould 4 is operated making the punch 31' couple with the forming cavity 8'. During this step, with the head portion 35' thereof the punch 31' presses the annular element 42 against the head portion 27' of the blank holder element 25' moving the latter to the second operating position against the bias of the springs 24'. The element 42 is thus forced to slide between the delimiting surfaces 40' of the forming cavity 8' to obtain, at the end of the stroke of the punch 31', the pulley 3 (shown in greater detail in figure 7) having an H section and opposite cavities 45, 46 of shape complementary to the shape of the head portions 27', 35' of the blank holder element 25' and of the punch 31', respectively.

In particular, the pulley 3 is formed by two, substantially cylindrical annular walls 47, 48 concentric to one another and maintained radially spaced by an intermediate, annular connecting portion 50 extending substantially in direction orthogonal to the annular walls 47, 48 themselves and defining the bottom of the opposite cavities 45, 46.

It is worth noting that, due to the different axial height of the delimiting surfaces 36', 37' of the head portion 35' and of the head portion 27', the axial height of the annular, radially most internal wall 47 of the pulley 3 is smaller than the axial height of the annular, radially most external wall 48.

From an examination of the features of the present invention the advantages that it allows to obtain are apparent.

In particular, the method and the device described allow to obtain the pulley 3 by means of plastic deformation, and thus without wasting material.

Furthermore, the two forming operations carried out on the moulds 1 and 2 allow to obtain pulleys with particularly thin H section in cost-effective manner and without the risk of breakage.

This result is greatly facilitated by the adoption of wavy surfaces 40' along the forming cavity 8': by virtue of this measure, the stretching of the material along the forming cavity 8' occurs practically only at the dips of the wave, while a stabilization effect of the material is obtained at the crests of the waves themselves and such a phenomenon, in fact, performs a local control function of the deformation.

It is finally apparent that changes and variations can be implemented to the method and device described and illustrated herein without departing from the scope of protection of the claims.

## Claims

1. A method for producing a pulley (3) for motor vehicle applications using as a starting product a perforated flat disc (41), **characterized by** the steps of:
- providing a first mould (1) comprising a first fixed annular forming cavity (8) and a first mobile annular punch (31), which is adapted to engage in use said first forming cavity (8) and has an annular head portion (35) defined internally and externally by respective conical side surfaces (36, 37) which converge towards the free end;
- arranging said flat disc (41) next to a first end opening (28) of said first forming cavity (8) facing said first punch (31), by resting it on a flat head surface (27) of a first annular blank holder element (25) mobile, within the first forming cavity (8), between a first operating position in which it engages said first end opening (28), and a second operating position, in which it is moved away from said first end opening (28);
- coupling said first punch (31) with said first forming cavity (8) by pressing said flat disc (41) between the head surface (27) of said first blank holder element (25) and said head portion (35) of the first punch (31) and moving said first blank holder element (25) in said second operating position so as to obtain an annular element (42) having a U-section complementary to the shape of the head portion (35) of the first punch (31);
- providing a second mould (2) comprising a second fixed annular forming cavity (8') and a second mobile annular punch (31'), which is adapted to engage in use said second forming cavity (8') and has an annular head portion (35') defined internally and externally by respective conical side surfaces (36', 37') which converge towards the free end;
- arranging said annular element (42) at a second end opening (28') of said second forming cavity (8') facing said second punch (31'), by engaging it on a head portion (27') having a complementary shape of a second annular blank holder element (25') mobile, within the second forming cavity (8'), between a first operating position, in which it engages said second end opening (28'), and a second operating position, in which it is moved away from said second end opening (28');
- coupling said second punch (31') with said second forming cavity (8') by pressing said annular element (42) between the head portions (27', 35') of said second blank holder element (25') and of the second punch (31') and moving said second blank holder element (25') in said second operating position so as to obtain said pulley (3) with an H section and with opposite cavities (45, 46) having shapes complementary to the shapes of said respective head portions (27', 35') of said second blank holder element (25') and of said second punch (31').

2. The method according to claim 1, wherein said head portions (27', 35') of said second blank holder element (25') and of said second punch (31') are identical.

3. The method according to claim 2, wherein said head portion (35) of said first punch (31) is identical to the head portions (27', 35') of said second blank holder element (25') and of said second punch (31').

4. The method according to any of the preceding claims, wherein said second forming cavity (8') is defined by wavy surfaces (40').

5. The method according to any of the preceding claims, wherein said opposite side surfaces (36, 37, 36', 37') of each of said head portions (27, 27', 35, 35') have different axial heights.

6. The method according to any of the preceding claims, wherein said first and second blank holder elements (25, 25') are elastically loaded in said respective first operating positions.

7. A device for producing a pulley (3) for motor vehicle applications, comprising a first and a second mould (1, 2), **characterized in that** said first mould (1) is adapted to form an annular element (42) having a U-section from a flat perforated disc (41) and comprises:
- a first fixed annular forming cavity (8);
- a first mobile annular punch (31), which is adapted to engage in use said first forming cavity (8) and has an annular head portion (35) complementary to the section of the annular element (42) to be formed and defined internally and externally by respective conical side surfaces (36, 37) which converge towards the free end; and
- a first annular blank holder element (25) having a flat head surface (27) mobile, within said first forming cavity (8), between a first operating position, in which it engages a first end opening (28) of said first forming cavity (8) facing said first punch (31) to receive said flat disc (41) resting on its head surface (27), and a second operating position, reached in virtue of the thrust generated by said first punch (31) during the coupling with said first forming cavity (8) and in which it is moved away from said first end opening (28);
and **in that** said second mould (2) is adapted to form said pulley (3) with an H section from said annular element (42) and comprises:
- a second fixed annular forming cavity (8');
- a second mobile annular punch (31'), which is adapted to engage in use said second forming cavity (8') and has an annular head portion (27') complementary to the section of one of the opposite cavities (45, 46) of the pulley (3) to be formed and defined internally and externally by respective conical side surfaces (36', 37') which converge towards the free end; and
- a second annular blank holder element (25') having a head portion (27') which has a shape complementary to the section of said annular element (42) and is mobile, within said second forming cavity (8'), between a first operating position, in which it engages a second end opening (28') of said second forming cavity (8') facing said second punch (31') to receive said annular element (42) engaged on its head portion (27'), and a second operating position, reached in virtue of the thrust generated by said second punch (31') during the coupling with said second forming cavity (8') and in which it is moved away from said second end opening (28').

8. The device according to claim 7, wherein said head portions (27', 35') of said second blank holder element (25') and of said second punch (31') are identical.

9. The device according to claim 8, wherein said head portion (35) of said first punch (31) is identical to the head portions (27', 35') of said second blank holder element (25') and of said second punch (31').

10. The device according to any of claims 7 to 9, wherein said second forming cavity (8') is defined by wavy surfaces (40').

11. The device according to any of claims 7 to 10, wherein said opposite side surfaces (36, 37, 36', 37') of each of said head portions (27, 27', 35, 35') have different axial heights.

12. The device according to any of claims 7 to 11, wherein said first and second blank holder elements (25, 25') are elastically loaded in said respective first operating positions.

## Patentansprüche

1. Ein Verfahren zum Herstellen einer Riemenscheibe (3) für Kraftfahrzeuganwendungen, das als ein Ausgangsprodukt eine perforierte flache Scheibe (41) verwendet, **gekennzeichnet durch** die Schritte:
- Bereitstellen einer ersten Form (1), die eine erste unbewegliche ringförmige Umformaussparung (8) und einen ersten beweglichen ringförmigen Stempel (31) umfasst, der angepasst ist, um bei Verwendung mit der ersten Umformaussparung (8) in Eingriff zu stehen und einen ringförmigen Kopfbereich (35) aufweist, der innen und außen **durch** entsprechende konische Seitenoberflächen (36, 37) definiert ist, die in Richtung des freien Endes zusammenlaufen;
- Anordnen der flachen Scheibe (41) neben einer ersten Endöffnung (28) der ersten Umformaussparung (8), die dem ersten Stempel (31) gegenüberliegt, **durch** Anordnen der flachen Scheibe (41) auf einer flachen Kopsoberfläche (27) eines ersten ringförmigen Freihalteelements (25), das innerhalb der ersten Umformaussparung (8) beweglich ist zwischen einer ersten Betriebsposition, in der es mit der ersten Endöffnung (28) in Eingriff steht, und einer zweiten Betriebsposition, in der es von der ersten Endöffnung (28) wegbewegt ist;
- Koppeln des ersten Stempels (31) mit der ersten Umformaussparung (8) mittels Zusammendrücken der flachen Scheibe (41) zwischen der Kopfoberfläche (27) des ersten Freihalteelements (25) und dem Kopfbereich (35) des ersten Stempels (31) und Bewegen des ersten Freihalteelements (25) in die zweite Betriebsposition, um so ein ringförmiges Element (42) mit einem U-Abschnitt zu erhalten, der komplementär zur Form des Kopfbereichs (35) des ersten Stempels (31) ist;
- Bereitstellen einer zweiten Form (2), umfassend eine zweite unbewegliche ringförmige Umformaussparung (8') sowie einen zweiten beweglichen ringförmigen Stempel (31'), der angepasst ist, um bei Verwendung mit der zweiten Umformaussparung (8') in Eingriff zu stehen und einen ringförmigen Kopfbereich (35') aufweist, der innen und außen **durch** entsprechende konische Seitenoberflächen (36', 37') definiert ist, die in Richtung des freien Endes zusammenlaufen;
- Anordnen des ringförmigen Elements (42) an einer zweiten Endöffnung (28') der zweiten Umformaussparung (8'), die dem zweiten Stempel (31') gegenüberliegt, **durch** in Eingriff bringen des ringförmigen Elements (42) mit einem Kopfbereich (27'), der eine Form aufweist, die komplementär zu einem zweiten ringförmigen Freihalteelement (25') ist, das innerhalb der zweiten Umformaussparung (8') beweglich ist zwischen einer ersten Betriebsposition, in der es mit der zweiten Endöffnung (28') in Eingriff steht, und einer zweiten Betriebsposition, in der es von der zweiten Endöffnung (28') wegbewegt ist;
- Koppeln des zweiten Stempels (31') mit der zweiten Umformaussparung (8') mittels Zusammendrücken des ringförmigen Elements (42) zwischen den Kopfbereichen (27', 35') des zweiten Freihalteelements (25') und des zweiten Stempels (31') und Bewegen des zweiten Freihalteelements (25') in die zweite Betriebsposition, um so die Riemenscheibe (3) mit einem H-Abschnitt und mit entgegengesetzten Aussparungen (45, 46) zu erhalten, die Formen aufweist, die komplementär zu den Formen der entsprechenden Kopfbereiche (27', 35') des zweiten Freihalteelements (25') und des zweiten Stempels (31') sind.

2. Das Verfahren gemäß Patentanspruch 1, wobei die Kopfbereiche (27', 35') des zweiten Freihalteelements (25') und des zweiten Stempels (31') identisch sind.

3. Das Verfahren gemäß Patentanspruch 2, wobei der Kopfbereich (35) des ersten Stempels (31) identisch mit den Kopfbereichen (27', 35') des zweiten Freihalteelements (25') und des zweiten Stempels (31') ist.

4. Das Verfahren gemäß einem der vorhergehenden Patentansprüche, wobei die zweite Umformaussparung (8') durch wellenförmige Oberflächen (40') definiert ist.

5. Das Verfahren gemäß einem der vorhergehenden Patentansprüche, wobei die entgegengesetzten Seitenoberflächen (36, 37, 36', 37') von jedem der Kopfbereiche (27, 27', 35, 35') unterschiedliche axiale Höhen aufweisen.

6. Das Verfahren gemäß einem der vorhergehenden Patentansprüche, wobei das erste und das zweite Freihalteelement (25, 25') in der entsprechenden ersten Betriebsposition elastisch belastet sind.

7. Eine Vorrichtung zum Herstellen einer Riemenscheibe (3) für Kraftfahrzeuganwendungen, umfassend eine erste und eine zweite Form (1, 2), **dadurch gekennzeichnet, dass** die erste Form (1) angepasst ist, um ein ringförmiges Element (42) mit einem U-Abschnitt aus einer flachen perforierten Scheibe (41) zu bilden, und umfasst:
- eine erste unbewegliche ringförmige Umformaussparung (8);
- einen ersten beweglichen ringförmigen Stempel (31), der angepasst ist, um bei Verwendung mit der ersten Umformaussparung (8) in Eingriff zu stehen, und der einen ringförmigen Kopfbereich (35) aufweist, der komplementär zum Abschnitt des zu formenden ringförmigen Elements (42) ist sowie innen und außen durch entsprechende konische Seitenoberflächen (36, 37) definiert ist, die in Richtung des freien Endes zusammenlaufen; und
- ein erstes ringförmiges Freihalteelement (25), das eine flache Kopfoberfläche (27) aufweist und innerhalb der ersten Umformaussparung (8) beweglich ist zwischen einer ersten Betriebsposition, in der es mit einer ersten Endöffnung (28) der ersten Umformaussparung (8) in Eingriff steht, die dem ersten Stempel (31) gegenüberliegt, um die auf seiner Kopfoberfläche (27) liegende flache Scheibe (41) aufzunehmen, und einer zweiten Betriebsposition, die aufgrund des Drucks erreicht wird, der durch den ersten Stempel (31) während des Koppelns mit der ersten Umformaussparung (8) erzeugt wird, und in der es von der ersten Endöffnung (28) wegbewegt ist;
und dadurch, dass die zweite Form (2) angepasst ist, um die Riemenscheibe (3) mit einem H-Abschnitt aus dem ringförmigen Element (42) zu bilden, und umfasst:
- eine zweite unbewegliche ringförmige Umformaussparung (8'),
- einen zweiten beweglichen ringförmigen Stempel (31'), der angepasst ist, um bei Verwendung mit der zweiten Umformaussparung (8') in Eingriff zu stehen und der einen ringförmigen Kopfbereich (27') aufweist, der komplementär zum Abschnitt von einer der entgegengesetzten Aussparungen (45, 46) der zu formenden Riemenscheibe (3) ist sowie innen und außen durch entsprechende konische Seitenoberflächen (36', 37') gebildet ist, die in Richtung des freien Endes zusammenlaufen; und
- ein zweites ringförmiges Freihalteelement (25') mit einem Kopfbereich (27'), das eine Form aufweist, die komplementär zum Abschnitt des ringförmigen Elements (42) ist, und das innerhalb der zweiten Umformaussparung (8') beweglich ist zwischen einer ersten Betriebsposition, in der es mit einer zweiten Endöffnung (28') der zweiten Umformaussparung (8') in Eingriff steht, die dem zweiten Stempel (31') gegenüberliegt, um das mit seinem Kopfbereich (27') in Eingriff stehende ringförmige Element (42) aufzunehmen, und einer zweiten Betriebsposition, die aufgrund des durch den zweiten Stempel (31') während des Koppelns mit der ersten Umformaussparung (8') erzeugten Drucks erreicht wird und in der es von der zweiten Endöffnung (28') wegbewegt ist.

8. Die Vorrichtung gemäß Patentanspruch 7, wobei die Kopfbereiche (27', 35') des zweiten Freihalteelements (25') und des zweiten Stempels (31') identisch sind.

9. Die Vorrichtung gemäß Patentanspruch 8, wobei der Kopfbereich (35') des ersten Stempels (31) identisch mit den Kopfbereichen (27', 35') des zweiten Freihalteelements (25') und des zweiten Stempels (31') ist.

10. Die Vorrichtung gemäß einem der Patentansprüche 7 bis 9, wobei die zweite Umformaussparung (8') durch wellenförmiger Oberflächen (40') definiert ist.

11. Die Vorrichtung gemäß einem der Patentansprüche 7 bis 10, wobei die entgegengesetzten Seitenoberflächen (36, 37, 36', 37') von jedem der Kopfbereiche (27, 27', 35, 35') unterschiedliche axiale Höhen aufweisen.

12. Die Vorrichtung gemäß einem der Patentansprüche 7 bis 11, wobei das erste und das zweite Freihalteelement (25, 25') in der entsprechenden ersten Betriebsposition elastisch belastet sind.

## Revendications

1. Procédé de production d'une poulie (3) pour applications de véhicule à moteur en utilisant comme produit de départ un disque plat perforé (41), **caractérisé par** les étapes suivantes :
- fournir un premier moule (1) comprenant une première cavité de formage annulaire fixe (8) et un premier poinçon annulaire mobile (31) qui est adapté pour engager en utilisation ladite première cavité de formage (8) et présente une partie de tête annulaire (35) définie en interne et en externe par des surfaces latérales coniques respectives (36, 37) qui convergent vers l'extrémité libre ;
- disposer ledit disque plat (41) près d'une première ouverture d'extrémité (28) de ladite première cavité de formage (8) faisant face audit premier poinçon (31) en le posant sur une surface de tête plate (27) d'un premier élément serre-flan annulaire (25) mobile au sein de la première cavité de formage (8) entre une première position de fonctionnement, dans laquelle il engage ladite première ouverture d'extrémité (28), et une seconde position de fonctionnement, dans laquelle il est éloigné de ladite première ouverture d'extrémité (28) ;
- coupler ledit premier poinçon (31) avec ladite première cavité de formage (8) en pressant ledit disque plat (41) entre la surface de tête (27) dudit premier élément serre-flan (25) et ladite partie de tête (35) du premier poinçon (31) et en déplaçant ledit premier élément serre-flan (25) dans ladite seconde position de fonctionnement de sorte à obtenir un élément annulaire (42), dont la section en U est complémentaire à la forme de la partie de tête (35) du premier poinçon (31) ;
- fournir un second moule (2) comprenant une seconde cavité de formage annulaire fixe (8') et un second poinçon annulaire mobile (31') qui est adapté pour engager en utilisation ladite seconde cavité de formage (8') et présente une partie de tête annulaire (35') définie en interne et en externe par des surfaces latérales coniques respectives (36', 37') qui convergent vers l'extrémité libre ;
- disposer ledit élément annulaire (42) sur une seconde ouverture d'extrémité (28') de ladite seconde cavité de formage (8') faisant face audit second poinçon (31') en l'engageant sur une partie de tête (27') avec une forme complémentaire d'un second élément serre-flan annulaire (25') mobile au sein de la seconde cavité de formage (8') entre une première position de fonctionnement, dans laquelle il engage ladite seconde ouverture d'extrémité (28') et une seconde position de fonctionnement, dans laquelle il est éloigné de ladite seconde ouverture d'extrémité (28') ;
- coupler ledit second poinçon (31') avec ladite seconde cavité de formage (8') en pressant ledit élément annulaire (42) entre les parties de tête (27', 35') dudit second élément serre-flan (25') et du second poinçon (31') et en déplaçant ledit second élément serre-flan (25') dans ladite seconde position de fonctionnement de sorte à obtenir ladite poulie (3) avec une section en H et avec des cavités opposées (45, 46), dont les formes sont complémentaires aux formes desdites parties de tête respectives (27', 35') dudit second élément serre-flan (25') et dudit second poinçon (31').

2. Procédé selon la revendication 1, dans lequel lesdites parties de tête (27', 35') dudit second élément serre-flan (25') et dudit second poinçon (31') sont identiques.

3. Procédé selon la revendication 2, dans lequel ladite partie de tête (35) dudit premier poinçon (31) est identique aux parties de tête (27', 35') dudit second élément serre-flan (25') et dudit second poinçon (31').

4. Procédé selon l'une quelconque des revendications précédentes, dans lequel ladite première cavité de formage (8') est définie par des surfaces ondulées (40').

5. Procédé selon l'une quelconque des revendications précédentes, dans lequel lesdites surfaces latérales opposées (36, 37, 36', 37') de chacune desdites parties de tête (27, 27', 35, 35') présentent différentes hauteurs axiales.

6. Procédé selon l'une quelconque des revendications précédentes, dans lequel lesdits premier et second éléments serre-flans (25, 25') sont chargés élastiquement dans lesdites premières positions de fonctionnement respectives.

7. Dispositif de production d'une poulie (3) pour applications de véhicule à moteur, comprenant un premier et un second moule (1, 2), **caractérisé en ce que** ledit premier moule (1) est adapté pour former un élément annulaire (42) présentant une section en U dans un disque perforé plat (41) et comprend :
- une première cavité de formage annulaire fixe (8) ;
- un premier poinçon (31) annulaire mobile qui est adapté pour engager en utilisation ladite première cavité de formage (8) et présente une partie de tête annulaire (35) complémentaire à la section de l'élément annulaire (42) à former et définie en interne et en externe par des surfaces latérales coniques respectives (36, 37) qui convergent vers l'extrémité libre ; et
- un premier élément serre-flan annulaire (25) ayant une surface de tête plate (27) mobile au sein de ladite première cavité (8) entre une première position de fonctionnement, dans laquelle il engage une première ouverture d'extrémité (28) de ladite première cavité de formage (8) faisant face audit premier poinçon (31) pour recevoir ledit disque plat (41) reposant sur sa surface de tête (27) et une seconde position de fonctionnement atteinte en vertu de la poussée générée par ledit premier poinçon (31) pendant le couplage avec ladite première cavité de formage (8) et dans laquelle il est éloigné de ladite première ouverture d'extrémité (28) ;
et **en ce que** ledit second moule (2) est adapté pour former ladite poulie (3) avec une section en H dans ledit élément annulaire (42) et comprend :
- une seconde cavité de formage annulaire fixe (8') ;
- un second poinçon annulaire mobile (31') qui est adapté pour engager en utilisation ladite seconde cavité de formage (8') et présente une partie de tête annulaire (27') complémentaire à la section de l'une des cavités opposées (45, 46) de la poulie (3) à former et définie en interne et en externe par des surfaces latérales coniques respectives (36', 37') qui convergent vers l'extrémité libre ; et
- un second élément serre-flan annulaire (25') avec une partie de tête (27') qui présente une forme complémentaire à la section dudit élément annulaire (42) et est mobile au sein de ladite seconde cavité de formage (8') entre une première position de fonctionnement, dans laquelle il engage une seconde ouverture d'extrémité (28') de ladite seconde cavité de formage (8') faisant face audit second poinçon (31') pour recevoir ledit élément annulaire (42) engagé sur sa partie de tête (27'), et une seconde position de fonctionnement atteinte en vertu de la poussée générée par ledit second poinçon (31') pendant le couplage avec ladite seconde cavité de formage (8') et dans laquelle il est éloigné de ladite seconde ouverture d'extrémité (28').

8. Dispositif selon la revendication 7, dans lequel lesdites parties de tête (27', 35') dudit second élément serre-flan (25') et dudit second poinçon (31') sont identiques.

9. Dispositif selon la revendication 8, dans lequel ladite partie de tête (35) dudit premier poinçon (31) est identique aux parties de tête (27', 35') dudit second élément serre-flan (25') et dudit second poinçon (31').

10. Dispositif selon l'une quelconque des revendications 7 à 9, dans lequel ladite seconde cavité de formage (8') est définie par des surfaces ondulées (40').

11. Dispositif selon l'une quelconque des revendications 7 à 10, dans lequel lesdites surfaces latérales opposées (36, 37, 36', 37') de chacune desdites parties de tête (27, 27', 35, 35') ont différentes hauteurs axiales.

12. Dispositif selon l'une quelconque des revendications 7 à 11, dans lequel lesdits premier et second éléments serre-flans (25, 25') sont chargés de manière élastique dans lesdites premières positions de fonctionnement respectives.
